# EUROPÄISCHE PATENTSCHRIFT

(11) **EP 3 738 813 B1**
(45) Veröffentlichungstag und Bekanntmachung des Hinweises auf die Patenterteilung: **04.05.2022**
(21) Anmeldenummer: 20165794.7
(22) Anmeldetag: 26.03.2020
(51) Int. Cl.: B60K 15/067, B60K 15/03

(54) **KRAFTSTOFFTANKANORDNUNG MIT MINDESTENS ZWEI GETRENNTEN TANKKÖRPERN**
FUEL TANK ARRANGEMENT WITH AT LEAST TWO SEPARATE TANK BODIES
AGENCEMENT DE RÉSERVOIR DE CARBURANT DOTÉ D'AU MOINS DEUX CORPS DE RÉSERVOIR SÉPARÉS

(30) Priorität: 15.05.2019 DE 102019112741
(43) Veröffentlichungstag der Anmeldung: 18.11.2020
(73) Patentinhaber: KTM AG, 5230 Mattighofen (AT)
(72) Erfinder: DAVID, Fritz, 5302 Henndorf am Wallersee (AT); FESSL, Herbert, 5272 Treubach (AT); GRÖBNER, Helmut, 83329 Waging am See (DE); REINDL, Alexander, 5261 Uttendorf (AT)
(74) Vertreter: Söllner, Udo

(56) Entgegenhaltungen:
- EP-A2- 1 810 866
- DE-A1-102017 119 706
- US-A1- 2008 169 134

## Beschreibung

Die vorliegende Erfindung betrifft eine Kraftstofftankanordnung mit mindestens zwei getrennten Tankkörpern mit einem jeweiligen Tankkörperinnenraum und mindestens einem die Tankkörper zur Fluidkommunikation verbindenden Verbindungselement, wobei die Tankkörper und die Kraftstofftankanordnung mit Aufnahmemitteln zur Anordnung an einem Rahmenbauteil eines Fahrzeugs mit einem Fahrersattel ausgebildet ist, nach dem Oberbegriff des Anspruchs 1.

Bei dem Fahrzeug mit einem Fahrersattel kann es sich beispielsweise um ein Motorrad handeln oder auch ein mehr als einspuriges Fahrzeug in der Form beispielsweise eines Quads oder ATVs.

Bei bekannten derartigen Fahrzeugen ist die Kraftstofftankanordnung oftmals als Satteltank ausgebildet, der in Fahrtrichtung des Fahrzeugs betrachtet vor dem Fahrersattel angeordnet ist und ein Rahmenoberteil in der Form beispielsweise eines Oberzugrohrs überspannt.

So ist beispielsweise anhand der EP 2 165 921 B1 ein einteiliger Kraftstofftank aus einem Kunststoffwerkstoff in der Form eines Satteltanks bekannt geworden, welcher von einer mehrteiligen Abdeckung abgedeckt wird, die über Verbindungselemente in der Form von beispielsweise Klammern miteinander verbunden sind und die Abdeckung der Abdeckung des Kraftstofftanks dient.

Anhand der EP 3 002 193 B1 ist ein Kraftstofftank für ein Motorrad bekannt geworden, welcher durch Umformung eines Aluminiumbleches gefertigt ist.

Anhand der DE 10 2007 009 113 B4 ist ein mehrteiliger Kraftstofftank bekannt geworden, der als Satteltank ausgebildet ist und als Schweißkonstruktion aus drei Teilen zusammengesetzt wird, nämlich einem Tankoberteil, einem Tankunterteil und einem Tankvorderteil, die demgemäß durch Schweißen miteinander verbunden werden.

Anhand der DE 698 27 782 T2 ist ein mehrteiliger Tank für ein Motorrad bekannt geworden, der sich zusammensetzt aus einem Kraftstoffbehälter, einer Luftfilterbox und einem Ausgleichsbehälter für die Kühlflüssigkeit des Motors des Motorrads.

Anhand der DE 10 2004 021 649 A1 ist ein Satteltank für Motorräder bekannt geworden, welcher einteilig ausgebildet ist und ein linkes sowie ein rechtes Tankvolumen besitzt und beide Tankvolumina sind mittels eines mittleren Tankbereichs miteinander verbunden.

Innerhalb des so gebildeten Satteltanks ist eine Verbindungsleitung angeordnet, welche die beiden Tankvolumina verbindet und ein Schwallblech im Tankinneren sorgt dafür, dass beim Befüllen des bekannten Tanks mit Kraftstoff der Kraftstoff zunächst primär in ein Tankvolumen strömt und beim Ansteigen des Kraftstoffpegels im Tankinneren durch den ansteigenden Kraftstoffpegel Luft aus der Verbindungsleitung verdrängt wird und beim Betrieb des Motors des Motorrads der Kraftstoffpegel in beiden Tankvolumina in gleicher Weise absinkt.

Schließlich ist anhand der Anmelderin eine Kraftstofftankanordnung mit zwei getrennten Tankkörpern bekannt geworden mit einem jeweiligen Tankinnenraum und einem die Tankkörper zur Fluidkommunikation verbindenden Verbindungselement. Bei der bekannten Kraftstofftankanordnung sind die beiden Tankkörper mittels eines Kunststoffwerkstoffes gebildet und die beiden Tankkörper können mittels Aufnahmemitteln an einem Rahmenbauteil des damit versehenen Fahrzeugs mit Fahrersattel in der Form eines Motorrads festgelegt werden.

Bei dieser bekannten Kraftstofftankanordnung besitzen beide Tankkörper eine jeweilige Kraftstoffeinfüllöffnung mit einem jeweiligen Tankdeckel, welcher mittels eines Schlüssels vom Fahrer des Fahrzeugs betätigt werden kann. Die voneinander separaten Tankkörper werden bei der Montage des Fahrzeugs separat am Rahmen des Fahrzeugs mittels Schraubenverbindungen festgelegt.

Obwohl sich diese bekannte Konfiguration einer Kraftstofftankanordnung in der Praxis bereits bestens bewährt hat, besitzt sie trotzdem Raum für Veränderung zur Erreichung einer besseren Handhabbarkeit bei der Montage des mit der Kraftstofftankanordnung zu versehenen Fahrzeugs und auch zur Vereinfachung der Kraftstofftankanordnung.

Die Erfindung weist zur Lösung dieser Aufgabe die im Anspruch 1 angegebenen Merkmale auf. Vorteilhafte Ausgestaltungen hiervon sind den weiteren Ansprüchen beschrieben.

Die Erfindung schafft eine Kraftstofftankanordnung mit mindestens zwei getrennten Tankkörpern mit einem jeweiligen Tankkörperinnenraum und mindestens einem die Tankkörper zur Fluidkommunikation verbindenden Verbindungselement, wobei die Tankkörper und die Kraftstofftankanordnung mit Aufnahmemitteln zur Anordnung an einem Rahmenbauteil eines Fahrzeugs mit einem Fahrersattel ausgebildet ist, wobei die Kraftstofftankanordnung ein Verteilerelement mit einer Kraftstoffeinfüllöffnung aufweist und das Verteilerelement mittels mindestens eines fluidleitenden Verbindungsmittels mit den Tankkörpern fluidleitend verbunden ist.

Die so ausgebildete erfindungsgemäße Kraftstofftankanordnung weist also neben den getrennten Tankkörpern, die über mindestens ein Verbindungselement zur Fluidkommunikation verbunden sind, ein Verteilerelement auf, welches ebenfalls mit den Tankkörpern fluidleitend verbunden ist und das Verteilerelement nur eine gemeinsame Kraftstoffeinfüllöffnung besitzt, über die beide Tankkörper beim Befüllen der erfindungsgemäßen Kraftstofftankanordnung mit Kraftstoff befüllt werden können.

Auf diese Weise ist es möglich, nicht nur einen Verschlussdeckel der Kraftstoffeinfüllöffnung einzusparen, sondern es wird auf diese Weise auch möglich, den Komfort für den Benutzer des Fahrzeugs zu erhöhen, da der dann nur mehr einfach notwendige Verschlussdeckel der Kraftstoffeinfüllöffnung auch als mittels eines elektromagnetisch betätigten Sperrglieds verriegelbarer Tankdeckel ausgebildet sein kann. Ein solcher Tankdeckel benötigt Zusatzbauteile in der Form beispielsweise einer elektronischen Steuereinrichtung und des erwähnten Sperrglieds und ein Wegfall eines Verschlussdeckels sorgt einerseits für ein entsprechendes Einsparpotenzial bezüglich der Kosten der Kraftstofftankanordnung und beim Benutzer für einen Komfortgewinn, da er die erfindungsgemäße Kraftstofftankanordnung über die Bedienung nur eines Verschlussdeckels betanken kann, die nach der Betankung auch ohne die Bedienung mittels eines Schlüssels im verschlossenen Zustand mittels des Sperrglieds verriegelt werden kann, wodurch neben dem Komfortgewinn durch die Notwendigkeit nur mehr eines Betankungsvorgangs auch ein Sicherheitsgewinn für den Benutzer des Fahrzeugs einhergeht.

Die Tankkörper sind beispielsweise aus einem Kunststoffwerkstoff ausgebildet, können aber auch aus einem metallischen Werkstoff ausgebildet sein, also beispielsweise auch als aus einem Metallblechmaterial gefertigt sein oder eine Konfiguration auf der Basis einer Kompositbauweise besitzen.

Nach einer Weiterbildung der Erfindung ist es vorgesehen, dass das Verteilerelement derart ausgebildet ist, dass die Tankkörper mittels nur einer Kraftstoffeinfüllöffnung des Verteilerelements mit Kraftstoff befüllbar sind.

Hierzu kann das Verteilerelement einen Verteilerkörper mit einem Verteilerkörperinnenraum aufweisen, von dem ausgehend das mindestens eine fluidleitende Verbindungsmittel zu den Tankkörpern zur Befüllung der Tankkörper mit Kraftstoff vorgesehen ist.

Nach dieser Konfiguration ist es also möglich, dass sich vom Verteilerkörperinnenraum ausgehend ein fluidleitendes Verbindungsmittel zu einem Tankkörper erstreckt, von dem ausgehend ein fluidleitendes Verbindungsmittel zum zweiten Tankkörper verläuft oder auch eine Konfiguration, nach der sich vom Verteilerkörperinnenraum ausgehend jeweils ein fluidleitendes Verbindungsmittel zu den körperlich voneinander getrennten Tankkörpern erstreckt und in beiden Fällen somit über die Befüllung des Verteilerkörperinnenraums mit Kraftstoff über die nur eine Kraftstoffeinfüllöffnung die getrennten Tankkörper befüllt werden können.

Es ist nach einer Weiterbildung der Erfindung vorgesehen, dass die Kraftstofftankanordnung eine erste fluidleitende Entlüftungseinrichtung zwischen einem jeweiligen Tankkörper und dem Verteilerelement sowie eine zweite fluidleitende Entlüftungseinrichtung zwischen einem jeweiligen Tankkörper und dem Verteilerelement besitzt.

Bei einem einstückigen Satteltank findet die Entlüftung des Satteltanks beim Befüllen des Tanks mit Kraftstoff über die geöffnete Kraftstoffeinfüllöffnung statt, über die der Kraftstoff in den Tankinnenraum gefüllt wird und während des Betriebs des Fahrzeugs bei geschlossenem Tankdeckel über den Tankdeckel selbst, da sich der Kraftstoff im Tankinnenraum betriebsbedingt durch während des Betriebs den Kraftstoff beaufschlagende Wärme ausdehnen kann und hierzu ein entsprechendes Luftvolumen im Tankinnenraum verdrängt werden muss.

Im Gegensatz hierzu sind für die Entlüftung der erfindungsgemäßen Kraftstofftankanordnung zwei separate Entlüftungseinrichtungen für jeden Tankkörper vorgesehen.

Die erste fluidleitende Entlüftungseinrichtung ist dabei für die Entlüftung während des Betankungsvorgangs vorgesehen. Diese erste fluidleitende Entlüftungseinrichtung kann dabei von einer Schlauchleitung oder einer anderen Fluidverbindung zwischen dem Tankinnenraum des Tankkörpers und dem Verteilerkörperinnenraum gebildet werden, sodass bei einem langsamen Ansteigen des Kraftstofffüllstands im Tankkörperinnenraum während des Tankvorgangs und durch das fluidleitende Verbindungsmittel strömendem Kraftstoff vom ansteigenden Kraftstoffpegel verdrängte Luft über die erste fluidleitende Entlüftungseinrichtung aus dem Tankinnenraum entströmen kann.

Erreicht dann der Kraftstoffpegel das Austrittsende der ersten fluidleitenden Entlüftungseinrichtung im Tankkörperinnenraum, dann kann bei weiter steigendem Kraftstoffpegel keine Luft aus dem Tankinnenraum mehr durch die erste fluidleitende Entlüftungseinrichtung in Richtung zum Verteilerkörperinnenraum entweichen.

Dies führt dazu, dass sich auch der Verteilerkörperinnenraum mit Kraftstoff füllt und der Kraftstoffpegel im Verteilerkörperinnenraum in Richtung zur Kraftstoffeinfüllöffnung ansteigt. Nach Abschluss des Tankvorgangs befindet sich also Kraftstoff im Verteilerkörperinnenraum, der dann aber über die zweite fluidleitende Entlüftungseinrichtung zwischen dem Verteilerelement und dem Tankkörper, welche nach der Art einer Drossel wirkt, langsam aus dem Verteilerkörperinnenraum in Richtung zum Tankkörperinnenraum absinkt und im Gegenzug ein Leerraum im Verteilerkörperinnenraum freigegeben wird, welcher als Ausgleichsbehälter für sich während des Betriebs des mit der erfindungsgemäßen Kraftstofftankanordnung betriebenen Fahrzeugs ausdehnenden Kraftstoffs zur Verfügung steht.

Der Benutzer des Fahrzeugs kann also beim Betankungsvorgang in der dem Benutzer bekannten üblichen Weise vorgehen und die Zapfpistole durch die Kraftstoffeinfüllöffnung in den Verteilerkörperinnenraum einführen und den Betankungsvorgang so lange durchführen, bis die Selbstabschaltfunktion der Zapfpistole das Nachströmen von Kraftstoff beendet oder aber eine visuelle Prüfung des Kraftstoffpegels im Verteilerkörperinnenraum dem Benutzer zeigt, dass der Betankungsvorgang abgeschlossen ist.

Ein sich sodann im Verteilerkörperinnenraum befindlicher Kraftstoff strömt über die zweite fluidleitende Entlüftungseinrichtung zwischen dem jeweiligen Tankkörper und dem Verteilerelement in den jeweiligen Tankkörper nach, was dazu führt, dass das vorstehend beschriebene Ausgleichsvolumen im Verteilerkörperinnenraum bereitgestellt wird.

Es ist dabei nach einer Weiterbildung der Erfindung vorgesehen, dass sich die jeweils erste und zweite Entlüftungseinrichtung vom Tankkörperinnenraum eines jeweiligen Tankkörpers bis zum Verteilerkörperinnenraum erstreckt und mindestens eine Entlüftungseinrichtung zumindest entlang eines Teilbereichs der Erstreckung vom Tanckörperinnenraum zum Verteilerkörperinnenraum innerhalb des fluidleitenden Verbindungsmittels angeordnet ist. Auf diese Weise wird erreicht, dass das fluidleitende Verbindungsmittel in der Form beispielsweise eines Verbindungsschlauches zwischen dem Verteilerkörperinnenraum und dem Tankkörperinnenraum innerhalb des Verbindungsschlauches angeordnet ist und somit eine platzsparende und montagefreundliche Konfiguration erreicht ist.

Es ist nach einer Weiterbildung der Erfindung auch vorgesehen, dass die vorstehend erwähnte zweite Entlüftungsreinrichtung jeweils im Bereich der fluidleitenden Verbindung zum Verteilerkörperinnenraum oder Tankkörperinnenraum eine Drossel aufweist, welche durch eine Durchmesserreduzierung des Innendurchmessers einer fluidleitenden Verbindungsleitung der zweiten Entlüftungseinrichtung dargestellt ist. Durch diese Drossel wird das langsame Abströmen des sich im Verteilerkörperinnenraum nach dem Betankungsvorgang befindlichen Kraftstoffvolumens erreicht und das Austreten von Kraftstoff durch das Aufsteigen von Luftblasen aus dem Tankkörperinnenraum während des Nachströmvorgangs vermieden.

Ein Vorteil der erfindungsgemäßen Kraftstofftankanordnung besteht beispielsweise darin, dass die einzelnen Körperelemente der Kraftstofftankanordnung mit Volumeninnenräumen, obwohl diese zu einer einzigen Baugruppe integriert werden können, wie dies nachfolgend noch erläutert werden wird, mittels eines kostengünstigen Blasformvorgangs gefertigt werden können.

Die Erfindung zeichnet sich also nach einer Weiterbildung dadurch aus, dass die Tankkörper und das Verteilerelement jeweils mittels eines Blasformvorgangs aus einem Kunststoffwerkstoff gefertigt sind und an einander zugeordneten Anschlußbereichen jeweils einen Anschlussstutzen aufweisen, welcher mittels eines Spritzgießvorgangs aus einem Kunststoffwerkstoff gefertigt ist und formschlüssig am jeweiligen Anschlussbereich festgelegt ist.

Dies führt auch zu dem Vorteil, dass die Anschlussbereiche oder Anschlussflächen bei der Fertigung der jeweiligen Körperelemente mit Volumeninnenräumen ausgebildet werden können, während höhere Dichtigkeitsanforderungen aufweisende Anschlußelemente separat von den Körperelementen gefertigt werden können und dann beispielsweise mittels eines Schweißvorgangs mit den Körperelementen fluiddicht verbunden werden können.

Es ist nach einer Weiterbildung der Erfindung auch vorgesehen, dass das fluidleitende Verbindungsmittel ein schlauchförmiger Körper ist, welcher jeweils zwischen Tankkörper und Verteilerkörper lösbar festlegbar ist und einen Innendurchmesser aufweist, der zur Aufnahme einer fluidleitenden Entlüftungseinrichtung dimensioniert ist.

Dadurch kann nach einem solchen "Leitung in Leitung System" eine platzsparende Konfiguration geschaffen werden, welche zudem durch die Reduzierung von außen angebrachter, also exponierter Bauteile die Gefahr einer Beschädigung der Entlüftungseinrichtung reduziert.

Auch ist es nach einer Weiterbildung der Erfindung vorgesehen, dass der Verteilerkörper eine Anschlussfläche zur lösbaren Festlegung einer Aufnahme zur Festlegung eines Tankdeckel des Fahrzeugs aufweist. Diese Anschlussfläche kann daher in vorteilhafter Weise bei der Fertigung des Verteilerkörpers ausgebildet werden, sodass sie zur Festlegung der Aufnahme für den Tankdeckel vorbereitet ist. Bei der Aufnahme kann es sich beispielsweise um eine Tankdeckelbasis handeln, welche mittels Schraubenverbindungen an der Aufnahme festgelegt wird.

Es ist nach einer Weiterbildung der Erfindung auch vorgesehen, dass das eingangs erwähnte Aufnahmemittel in der Form einer Aufnahmeeinrichtung vorgesehen ist, welche mit einer ersten Aufnahmefläche zur lösbaren Festlegung des Verteilerelements an der Aufnahmeeinrichtung und zweiten Aufnahmeflächen zur lösbaren Festlegung der Tankkörper an der Aufnahmeeinrichtung und Montageflächen zur lösbaren Festlegung der Kraftstofftankanordnung an dem Rahmenbauteil des Fahrzeugs versehen ist.

Bei der Aufnahmeeinrichtung handelt es sich also um ein Trägermodul, an dem sowohl das Verteilerelement als auch die Tankkörper in einem noch vom Rahmenbauteil des Fahrzeugs getrennten Zustand lösbar festgelegt werden können, beispielsweise mittels Schraubenverbindungen und die so vormontierte Einheit dann als Kraftstofftankanordnung am Rahmenbauteil des Fahrzeugs lösbar festgelegt werden kann.

Diese Konfiguration besitzt den Vorteil, dass die Kraftstofftankanordnung separat vormontiert werden kann und als Gesamttanksystem etwaigen Prüfungen unterzogen werden kann und für etwaige Servicearbeiten am Fahrzeug als Gesamttanksystem vom Fahrzeug getrennt werden kann und daher auch die Gefahr von Undichtigkeiten bei der Demontage des Tanks verringert werden kann.

Zudem besitzt die Aufnahmeeinrichtung auch noch den Vorteil, zusätzliche Befestigungspunkte für Anbauteile am Fahrzeug bereitzustellen, wie beispielsweise Verkleidungen, Staufächer, oder auch Anbauteile zur Festlegung des Fahrersattels und dergleichen.

Es ist nach einer Weiterbildung der Erfindung vorgesehen, dass das erwähnte Aufnahmemittel mittels eines Kunststoffwerkstoffes gebildet ist und in einer Draufsichtansicht eine weitgehend rechteckförmige Konfiguration aufweist mit sich von einer Unterseitenfläche weg erstreckenden Befestigungslaschen zur lösbaren Festlegung der Tankkörper.

Das Aufnahmemittel kann an den jeweiligen Querseiten auch mit Handgriffflächen oder Handgriffausnehmungen versehen sein, welche zur Montage und zur Demontage der Kraftstofftankanordnung am Rahmenbauteil und vom Rahmenbauteil von Vorteil sind, da auf diese Weise definierte Bereiche der Kraftstofftankanordnung zu deren Handhabung geschaffen sind.

Es ist nach einer Weiterbildung der Erfindung auch vorgesehen, dass ein Tankkörper an einem Unterseitenbereich eine Aufnahmefläche zur lösbaren Festlegung einer Kraftstoffpumpe aufweist und ein Tankkörper an einem Unterseitenbereich eine Aufnahmefläche zur lösbaren Festlegung einer Füllstandsmeßeinrichtung aufweist.

Bei den Aufnahmeflächen kann es sich um Flanschflächen handeln, an der oder denen die Kraftstoffpumpe oder die Füllstandsmeßeinrichtung lösbar festgelegt werden kann, beispielsweise mittels Schraubenverbindungen oder es kann sich auch um als Schraubstutzen oder Gewindestutzen ausgebildete Aufnahmeflächen handeln, an der oder denen die Kraftstoffpumpe oder die Füllstandsmeßeinrichtung jeweils unter Anordnung von Dichtungseinrichtungen beispielsweise mittels einer Überwurfmutter festgelegt werden kann, sodass im Falle einer Reparatur der genannten Bauteile eine einfache Demontage- und Wiedermontagemöglichkeit gegeben ist.

Es ist nach einer Weiterbildung der Erfindung auch vorgesehen, dass die Tankkörper mit Aufnahmeflächen zur Abstützung der Tankkörper an elastischen Aufnahmemittel versehen sind, welche lösbar an dem Rahmenbauteil festlegbar sind. Bei den Aufnahmeflächen kann es sich beispielsweise um Zentrierflächen oder Schiebesitze handeln, in welche die elastischen Aufnahmemittel zur Abstützung der Tankkörper einfach eingeführt werden können und die Tankkörper auf diese Weise nach der Festlegung der Aufnahmemittel in Form von beispielsweise Abstandhaltern an dem Rahmenbauteil zusätzlich festgelegt sind.

Es ist nach einer Weiterbildung der Erfindung auch vorgesehen, dass das eingangs erwähnte Verbindungselement eine an den Tankkörper im Bereich deren jeweiliger Unterseite lösbar festlegbare Verbindungsleitung ist. Zur fluiddichten und lösbaren Festlegung der Verbindungsleitung an den Tankkörper können beispielsweise Schnellverschlusskupplungen vorgesehen sein, welche bei der Demontage der Verbindungsleitung automatisch abdichten und bei der Montage der Verbindungsleitung automatisch eine flutleitende Verbindung herstellen können. Diese Schnellverschlusskupplungen beziehungsweise Stutzen zur Aufnahme der Schnellverschlusskupplungen können an der in Hochachsrichtung des betriebsbereiten Fahrzeugs jeweils tiefsten Stelle der Tankkörper vorgesehen werden.

Schließlich ist es nach einer Weiterbildung der Erfindung auch vorgesehen, dass das Verteilerelement einen Ausgleichsraum aufweist, der zur Aufnahme von Kraftstoff ausgebildet ist, welcher beispielsweise beim Betrieb des Fahrzeugs und sich ausdehnendem Kraftstoff den Kraftstoff aufnehmen kann.

Die Erfindung wird im Folgenden anhand der Zeichnung näher erläutert. Diese zeigt in:
Fig. 1 eine perspektivische Darstellung einer Ausführungsform der Kraftstofftankanordnung gemäß der vorliegenden Erfindung in einer Gesamtansicht;
Fig. 2 eine perspektivische Darstellung des Verteilerkörpers;
Fig. 3 eine perspektivische Vorderseitenansicht des Verteilerkörpers mit Anschlussstutzen;
Fig. 4 eine Ausschnittsdarstellung eines Bereichs zwischen dem Verteilerkörper und einem Tankkörper;
Fig. 5 eine perspektivische Darstellung einer Aufnahmeeinrichtung in der Form eines Trägermoduls, an dem sowohl die Tankkörper als auch der Verteilerkörper lösbar festgelegt werden können;
Fig. 6 eine perspektivische Darstellung der Kraftstofftankanordnung, welche auch die Kraftstoffpumpe und die Füllstandsmeßeinrichtung zeigt;
Fig. 7 eine Darstellung ähnlich derjenigen nach Fig. 6, welche die Kraftstofftankanordnung in einer Ansicht von unten zeigt;
Fig. 8 zwei Darstellungen, welche die Anordnung der Kraftstofftankanordnung an einem Rahmenbauteil eines Motorrads zeigen;
Fig. 9 eine Darstellung und eine vergrößerte Darstellung, welche die Hauptauflagepunkte am Rahmenbauteil zur Anordnung der Kraftstofftankanordnung zeigt;
Fig. 10 eine Seitenansicht des Rahmenbauteils mit einem daran über elastische Aufnahmemittel festgelegten Tankkörper;
Fig. 11 eine Ansicht von oben auf eine Ausschnitt des Rahmenbauteils mit der daran angeordneten Kraftstofftankanordnung;
Fig. 12 eine Ausschnittsdarstellung der Kraftstofftankanordnung zur Erläuterung der Entlüftungseinrichtungen;
Fig. 13 eine vergrößerte Ausschnittsdarstellung nach Fig. 12;
Fig. 14 eine Darstellung zur Erläuterung der Anordnung der Kraftstoffpumpe am Tankkörper;
Fig. 15 eine Darstellung zur Erläuterung der Anordnung der Füllstandsmeßeinrichtung am Tankkörper;
Fig. 16 vier Darstellungen zur Erläuterung der Entlüftung der Kraftstofftankanordnung beim Betankungsvorgang;
Fig. 17 eine Darstellung eines Motorrads von der Seite mit der am Rahmen des Motorrads angeordneten Kraftstofftankanordnung; und
Fig. 18 eine Darstellung ähnlich derjenigen nach Fig. 17, welche das Motorrad mit die Kraftstofftankanordnung überdeckenden Abdeckungen zeigt.

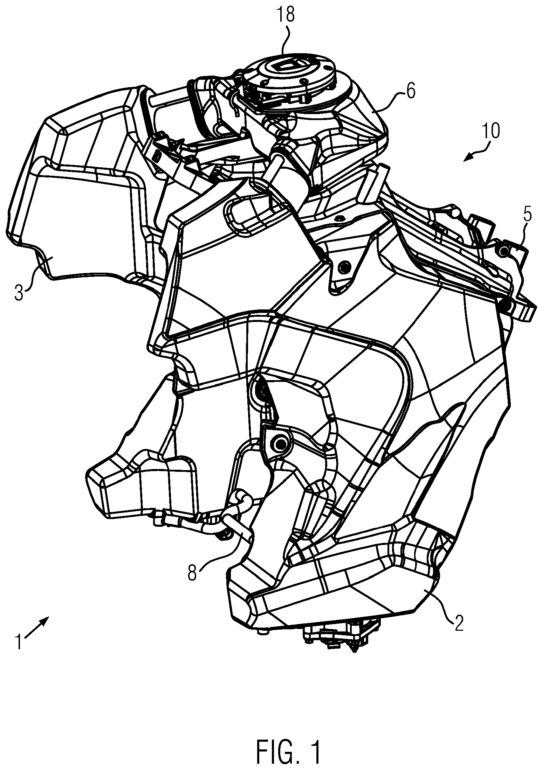

Fig. 1 zeigt eine perspektivische Darstellung einer Ausführungsform der Kraftstofftankanordnung 1 gemäß der vorliegenden Erfindung in einer Gesamtansicht.

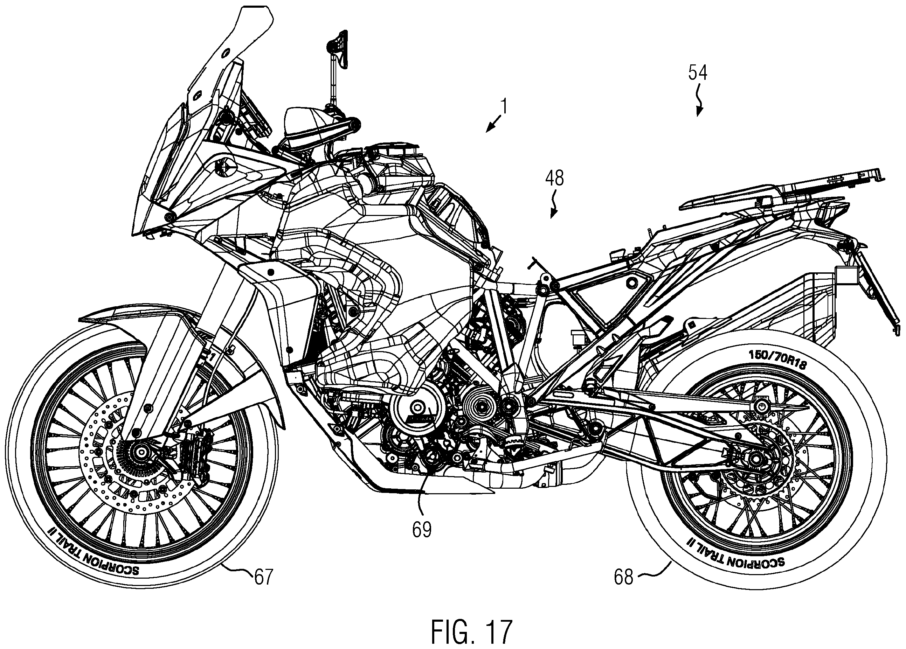

Die Kraftstofftankanordnung 1 weist einen ersten oder in Fahrtrichtung des Motorrads nach Fig. 17 betrachtet linken Tankkörper 2 auf und einen zweiten oder rechten Tankkörper 3, welche bei der dargestellten Ausführungsform aus einem Kunststoffwerkstoff gebildet sind.

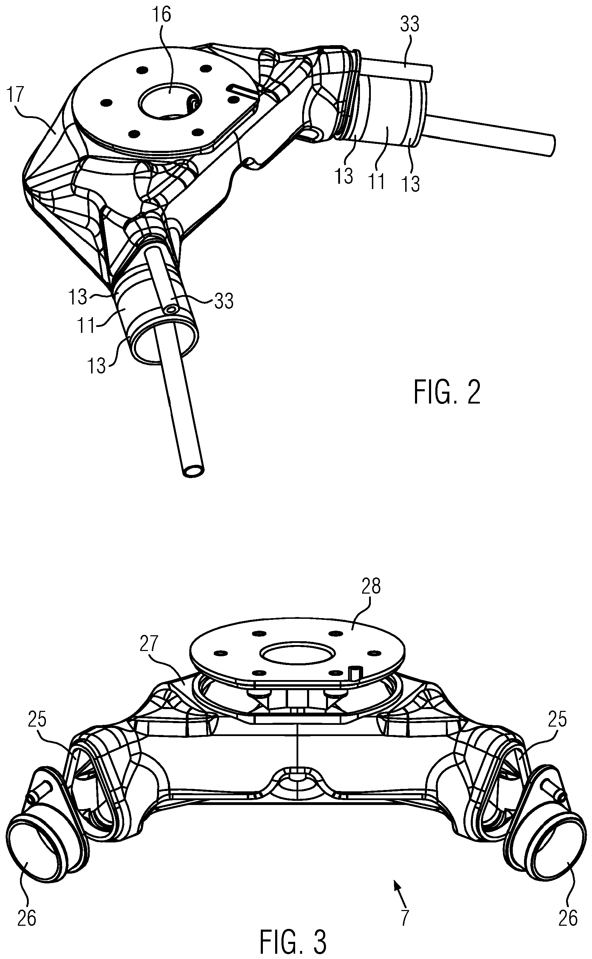

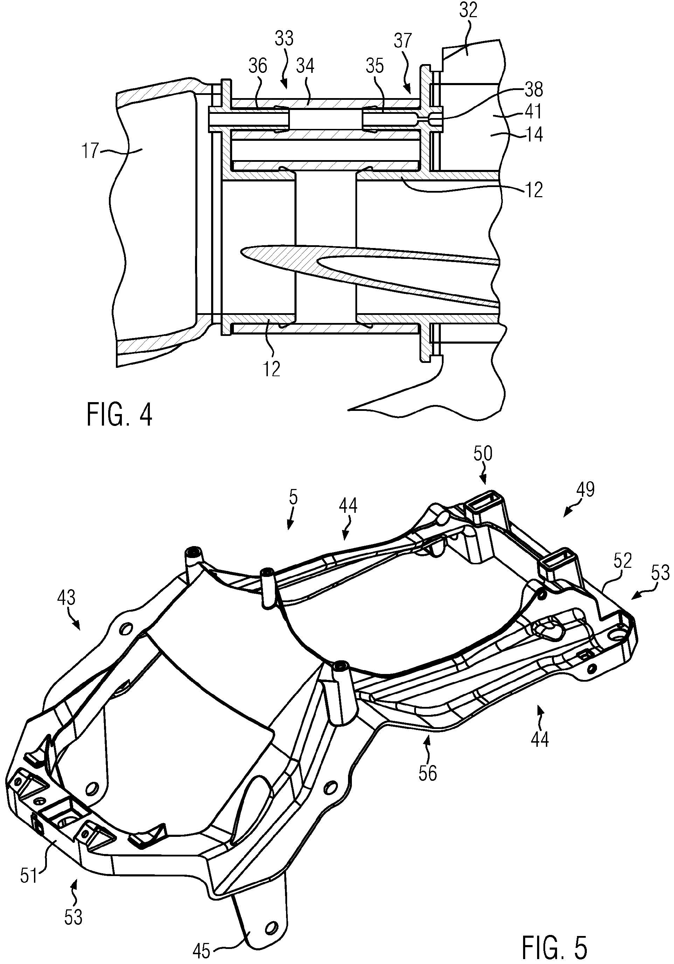

Darüber hinaus besitzt die Kraftstofftankanordnung 1 ein Aufnahmemittel 4 in der Form eines näher anhand von Fig. 5 der Zeichnung ersichtlichen Trägermoduls 5 und ein Verteilerelement 6, das in der Form eines näher anhand von Fig. 3 der Zeichnung ersichtlichen Verteilerkörpers 7 ausgebildet ist.

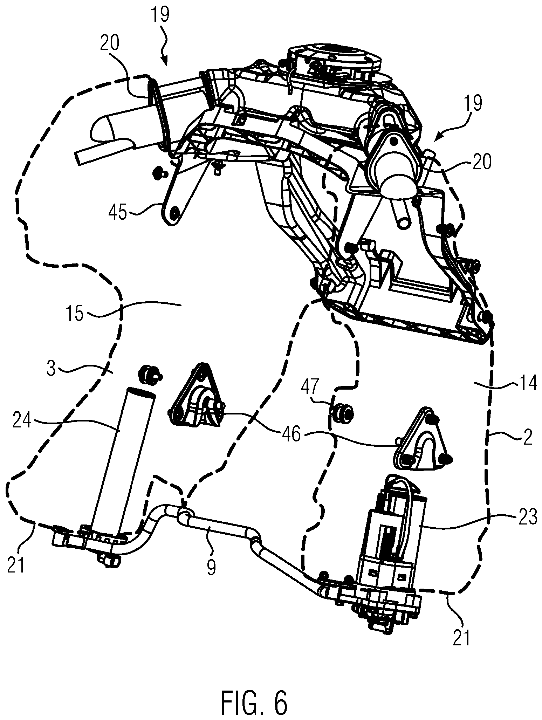

Zudem weist die Kraftstofftankanordnung 1 im Bereich der Unterseite der Tankkörper 2, 3 ein Verbindungselement 8 in der Form eines näher anhand von Fig. 6 der Zeichnung ersichtlichen Verbindungsschlauches 9 auf. Es können auch zwei oder mehr als zwei Verbindungselemente 8 zwischen den Tankkörpern vorgesehen sein.

Darüber hinaus ist zwischen dem Verteilerelement 6 und dem jeweiligen in Fig. 6 der Zeichnung anhand von gestrichelt dargestellten Umrißkanten ersichtlichen Tankkörper 2, 3 jeweils ein fluidleitendes Verbindungsmittel 10 in der Form eines näher anhand von Fig. 2 der Zeichnung ersichtlichen Fluorkautschukschlauches 11 vorgesehen, welcher beidseits über einen jeweiligen Anschlussstutzen 12 fluiddicht angebunden ist, wie dies anhand von Fig. 4 der Zeichnung ersichtlich ist, wobei der jeweilige Fluorkautschukschlauch 11 über ein Befestigungsmittel in der Form einer Schelle 13 am jeweiligen Anschlussstutzen 12 lösbar festgelegt ist. Bei den in Fig. 2 der Zeichnungen ersichtlichen Schellen 13 kann es sich um sogenannte Ohrklemmen handeln, welche für eine fluiddichte Verbindungsanordnung zwischen den jeweiligen Anschlussstutzen 12 und dem Schlauch 11 sorgen.

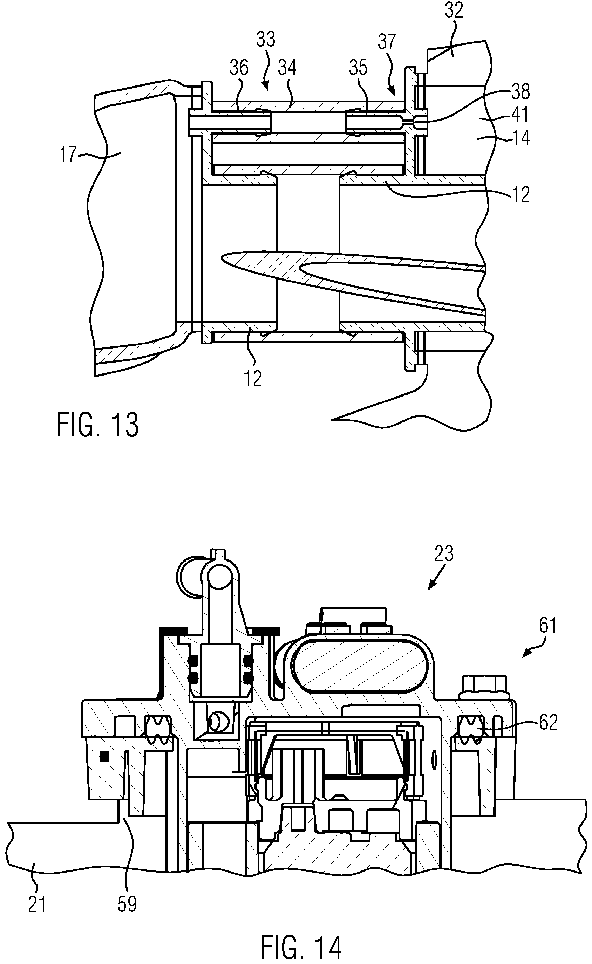

Beide Tankkörper 2, 3 weisen einen jeweiligen Tankkörperinnenraum 14, 15 auf, wie dies in Fig. 6 der Zeichnung dargestellt ist und an der Oberseite des Verteilerelements 6 befindet sich eine näher anhand von Fig. 2 der Zeichnung ersichtliche Kraftstoffeinfüllöffnung 16 angeordnet, durch die hindurch der Kraftstoff bei der Betankung der Kraftstofftankanordnung 1 in den Verteilerkörperinnenraum 17 (Fig. 13) eingefüllt werden kann, von dem ausgehend der Kraftstoff über die Schläuche 11 in die Tanckörperinnenräume 14, 15 strömen kann.

Wie es darüber hinaus anhand von Fig. 1 der Zeichnung ersichtlich ist, kann an der Kraftstoffeinfüllöffnung 16 des Verteilerelements 6 ein Tankdeckel 18 angebracht werden, bei dem es sich um einen mit einem Schlüssel betätigbaren Tankdeckel handeln kann oder um einen Tankdeckel, der elektromagnetisch mittels eines Sperrglieds betätigbar ist.

Die Konfiguration des Verteilerelements 6 beziehungsweise Verteilerkörpers 7 sorgt dafür, dass die Tankkörper 2, 3 mittels nur einer einzigen Kraftstoffeinfüllöffnung 16 am Verteilerelement 6 beziehungsweise Verteilerelement 7 betankt werden können.

Die beiden Tankkörper 2, 3 können mittels eines kostengünstigen Blasformvorgangs gefertigt werden und auch der Verteilerkörper 7 kann mittels eines kostengünstigen Blasformvorgangs gefertigt werden.

Wie es sich anhand von Fig. 3 der Zeichnung erschließt, besitzt der Verteilerkörper 7 eine in einer Draufsichtansicht weitgehend dreieckförmige Konfiguration mit Auslässen oder Anschlußbereichen 25, an denen jeweils einen Anschlussstutzen 26 mittels eines Schweißvorgangs in der Form beispielsweise eines Infrarot Schweißvorgangs fluiddicht festgelegt werden kann. Die Anschlussstutzen 26 können dabei als Spritzgussteile vorliegen, die mit dem Verteilerkörper 7 im Bereich der Auslässe 25 verschweißt werden.

An der Oberseite 27 des Verteilerkörpers 7 befindet sich ein Anschlussflansch 28 angeordnet, der ebenfalls aus einem Kunststoffwerkstoff gefertigt sein kann und als Spritzgussteil an dem Blasformteil Verteilerkörper 7 mittels eines Schweißvorgangs festgelegt werden kann.

Wie es anhand von Fig. 1 der Zeichnung ersichtlich ist, besitzen die beiden Tankkörper 2, 3 eine in einer Seitenansicht einem auf dem Kopf stehenden Buchstaben "L" ähnliche Konfiguration mit einer an der Oberseite 19 ausgebildeten Öffnung 20, durch die hindurch über die Schläuche 11 geführter Kraftstoff in die Tankinnenräume 14, 15 strömen kann.

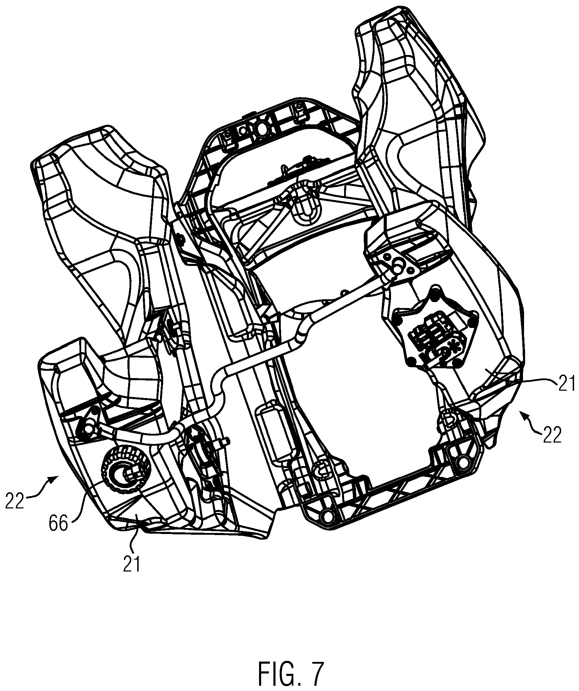

Wie es darüber hinaus anhand von Fig. 6 und Fig. 7 der Zeichnung ersichtlich ist, weisen beide Tankkörper 2, 3 an der jeweiligen Unterseite eine Aufnahmefläche 22 auf, an der eine in Fig. 6 der Zeichnung dargestellte Kraftstoffpumpe 23 und eine Füllstandsmeßeinrichtung 24 lösbar festgelegt werden können.

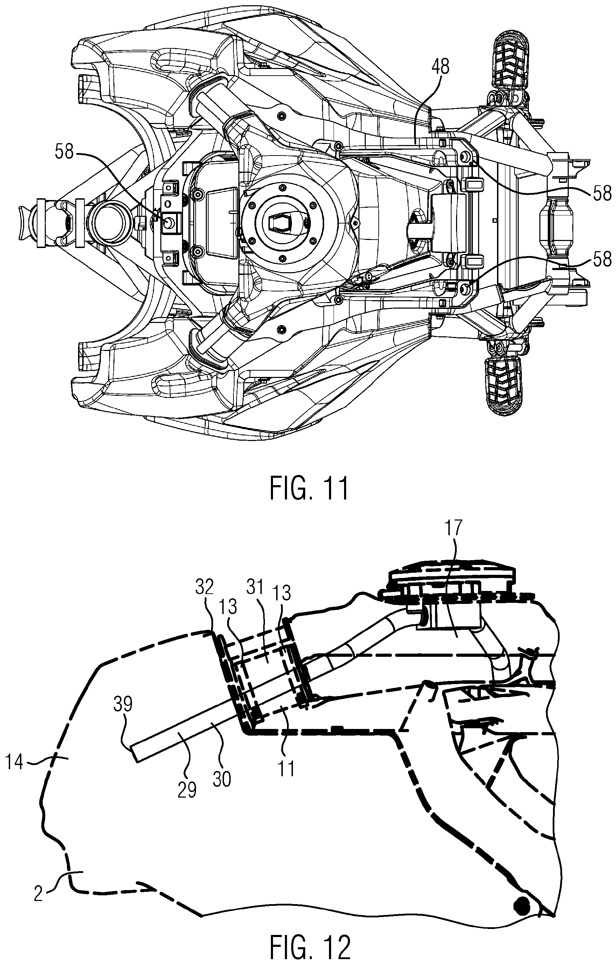

Fig. 12 der Zeichnung zeigt, dass sich eine erste Entlüftungseinrichtung 29 in der Form eines Entlüftungsschlauches 30 bis in den Tankinnenraum 14 des Tankkörpers 2 erstreckt und zwar durch den Innenraum 31 des Schlauches 11 hindurch und bis in den Verteilerkörperinnenraum 17 des Verteilerkörpers 7 hinein.

Auch der andere Tankkörper 3 weist eine solche erste Entlüftungseinrichtung 29 auf und ist so fluidisch mit dem Verteilerkörperinnenraum 17 des Verteilerkörpers 7 verbunden.

Die Tankkörper 2, 3 weisen am jeweiligen Anschlussbereich 32 Anschlussstutzen 12 auf, welche dort mittels eines Schweißvorgangs fluiddicht festgelegt werden können.

Wie es am einfachsten anhand von Fig. 4. Zeichnung ersichtlich ist, ist neben der ersten Entlüftungseinrichtung 29 eine zweite Entlüftungseinrichtung 33 zwischen dem Verteilerkörperinnenraum 17 und dem Tankkörperinnenraum 14, 15 vorgesehen.

Diese auch anhand von Fig. 2 der Zeichnung ersichtliche zweite Entlüftungseinrichtung kann in der Form eines Entlüftungsschlauches 34 vorgesehen sein, welcher über Schlauchanschlussstutzen 35, 36 an den Anschlussstutzen 12 des Verteilerkörpers 7 und Tankkörpers 2, 3 festgelegt werden kann.

Die zweite Entlüftungseinrichtung 33 besitzt eine Drossel 37, welche in der Form einer Durchmesserreduzierung 38 ausgebildet ist, wie dies anhand von Fig. 13 der Zeichnung ersichtlich ist und endet im Bereich des Verteilerkörperinnenraums 17 beziehungsweise des Verteilerkörpers am in Hochachsrichtung höchsten Punkt des Systems.

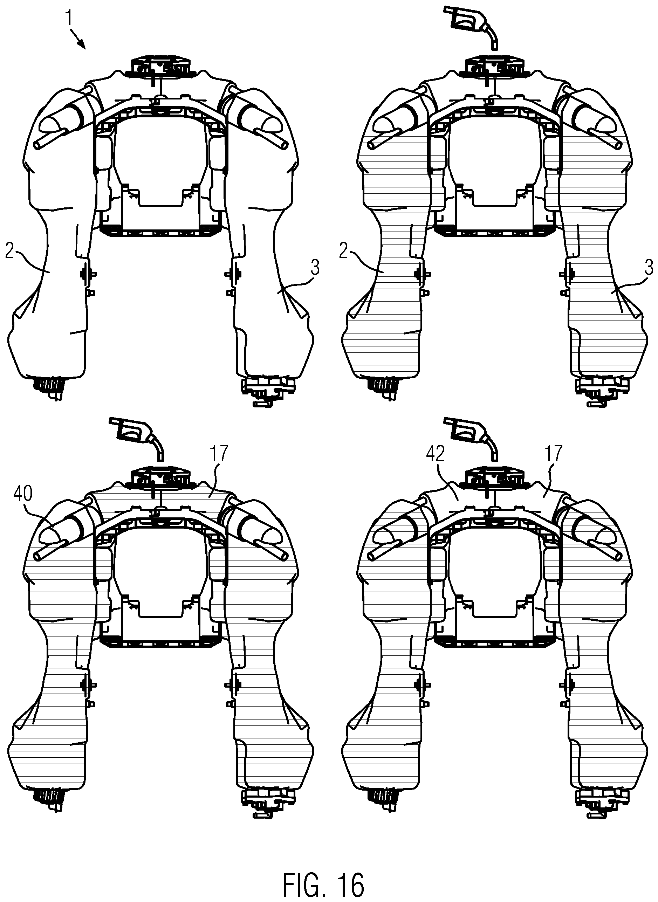

Anhand von Fig. 16 der Zeichnung wird nachfolgend der Betankungsvorgang erläutert.

Die linke obere Darstellung der Fig. 16 zeigt die Kraftstofftankanordnung 1 in einem Zustand ohne Kraftstoff. Die rechte obere Darstellung zeigt den Kraftstofffüllstand nach dem Füllen der Tankkörper 2, 3 und, da der Kraftstofffüllstand das in Fig. 12 der Zeichnung ersichtliche Auslassende 39 des Entlüftungsschlauches 30 erreicht hat, kann ab dem Erreichen dieses Füllstandsniveaus keine Luft mehr durch die erste Entlüftungseinrichtung 29 in Richtung zum Verteilerkörperinnenraum 17 entweichen.

Ein weiteres Nachfüllen von Kraftstoff führt dazu, dass sich der Verteilerkörperinnenraum 17 mit Kraftstoff füllt, wie dies in der unteren linken Darstellung der Fig. 16 der Zeichnung ersichtlich ist.

Ein Ansteigen des Kraftstoffpegels führt dazu, dass die schematisch dargestellte Zapfpistole automatisch abschaltet oder der Benutzer den Vorgang des Betankens von sich aus an der Zapfpistole unterbricht.

Da nach dem Abschluss des Betankungsvorgangs keine Luft mehr durch die erste Entlüftungseinrichtung 29 entweichen kann, sich aber noch Luft oberhalb des Kraftstoffpegels 40 im Tankkörperinnenraum 14 und 15 befindet, und sich dieser anhand von Fig. 4 der Zeichnung ersichtliche Restraum 41 in Fluidkommunikation befindet mit der zweiten Entlüftungseinrichtung 33, kann die im Restraum 41 eingeschlossene Luft langsam gegen den im Verteilerkörperinnenraum 17 befindlichen Kraftstoff ausgetauscht werden, indem der Kraftstoff langsam über die Drossel 37 in den Restraum 41 nachströmt.

Es stellt sich somit der in der rechten unteren Darstellung der Fig. 16 ersichtliche Kraftstoffpegel ein und im Verteilerkörperinnenraum 17 steht ein Ausgleichsraum zur Verfügung, der für die Aufnahme von sich in den Tankkörpern 2 und 3 ausdehnendem Kraftstoff zur Verfügung steht und die zweite Entlüftungseinrichtung 33 wirkt somit wieder als Entlüftung.

Fig. 5 der Zeichnung zeigt in einer perspektivischen Darstellung das vorstehend bereits erwähnte Trägermodul 5, an dem die Tankkörper 2, 3 und der Verteilerkörper 7 lösbar festgelegt werden können, sodass sich die in Fig. 1 der Zeichnung dargestellte Konfiguration der Kraftstofftankanordnung 1 ergibt.

Das Trägermodul 5 weist eine erste Aufnahmefläche 43 auf, an der das Verteilerelement 6 lösbar festgelegt werden kann, beispielsweise über nicht näher dargestellte Schraubenverbindungen.

Darüber hinaus besitzt das Trägermodul 5 zweite Aufnahmeflächen 44, an denen jeweils der Tankkörper 2, 3 lösbar festgelegt werden kann und zwar ebenfalls über Schraubenverbindungen oder dergleichen.

Zudem sind am Trägermodul 5 zwei sich von der Unterseite des Trägermoduls 5 weitgehend rechtwinklig nach unten erstreckende Befestigungslaschen 45 vorgesehen, an denen die Tankkörper 2, 3 lösbar festgelegt werden können, wie dies beispielsweise anhand von Fig. 6 der Zeichnung ersichtlich ist.

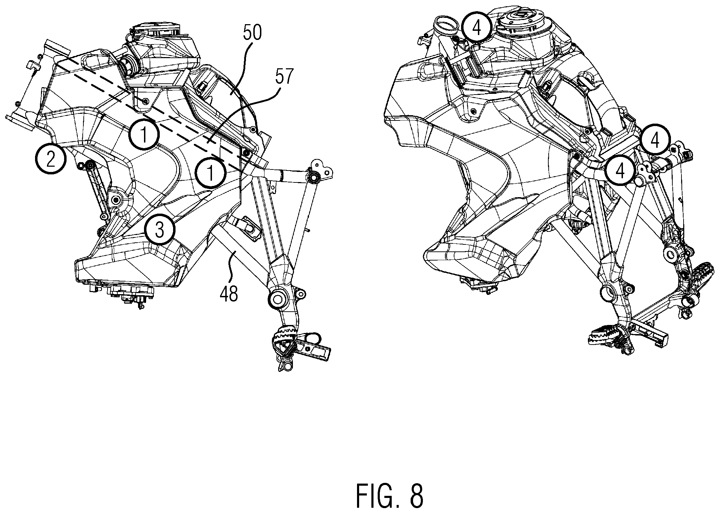

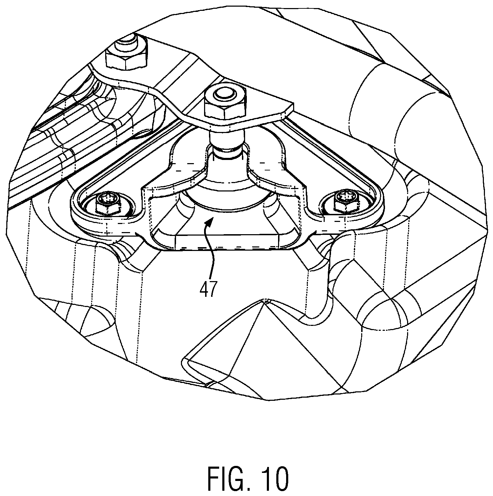

Zu dem weisen die beiden Tankkörper 2, 3 an der jeweiligen Innenseite des Tankkörpers 2, 3 Aufnahmeflächen 46 zur Abstützung der Tankkörper 2, 3 an elastischen Aufnahmemitteln 47 auf, wie dies anhand von Fig. 6 und Fig. 10 der Zeichnung ersichtlich ist. Die elastischen Aufnahmemittel 47 können am Rahmen oder Rahmenbauteil 48, der beispielsweise in Fig. 8 der Zeichnung ersichtlich ist, lösbar festgelegt werden und dienen somit zur zusätzlichen Abstützung der Tankkörper 2, 3 am Rahmen 48.

Wie es darüber hinaus anhand von Fig. 5 der Zeichnung ersichtlich ist, besitzt das Trägermodul 5 an der Oberseite eine dritte Aufnahmefläche 50, an welcher eine Luftfilterbox 50 festgelegt werden kann, wie dies ebenfalls anhand von Fig. 8 der Zeichnung ersichtlich ist.

Darüber hinaus weist das Trägermodul 5 an den jeweiligen Querseiten 53 Handgriffelemente 51, 52 auf, mittels der beispielsweise bei der Montage des in Fig. 17. Zeichnung dargestellten Motorrads 54 die Kraftstofftankanordnung 1 auf den Rahmen 48 aufgesetzt werden kann, sodass die erfindungsgemäße Kraftstoffanordnung 1 auch den Vorteil der einfachen Handhabung bei der Montage des Motorrads besitzt.

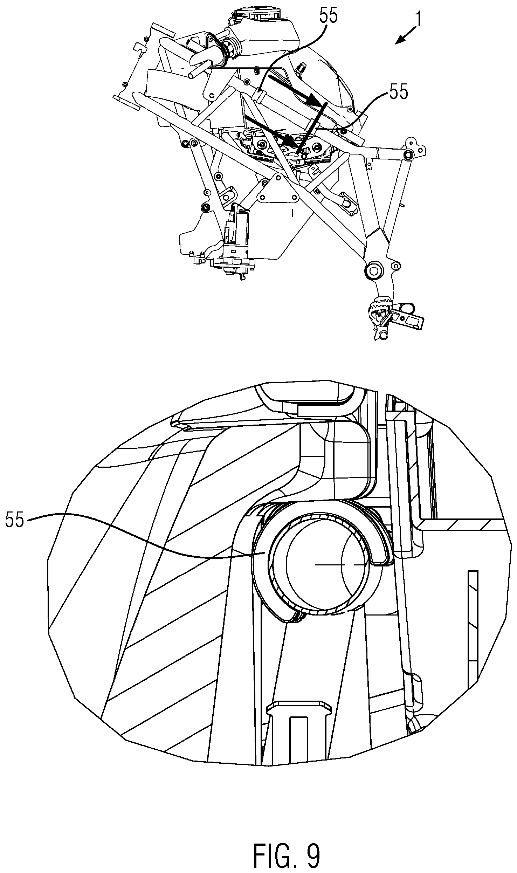

Zur Montage und Befestigung der Kraftstofftankanordnung 1 am Rahmen 48 weist der Rahmen Hauptauflagerpunkte 55 auf, wie dies anhand von Fig. 9 der Zeichnung ersichtlich ist, an denen die Kraftstofftankanordnung 1 aufgesetzt werden kann und zwar wie dies anhand von Fig. 8 der Zeichnung ersichtlich ist.

Zu diesem Zweck wird die Kraftstofftankanordnung 1 so am Rahmen 48 angeordnet, dass Montageflächen 56 (siehe Fig. 5) am jeweiligen Oberzugrohr 57 an den Hauptauflagerpunkten zur Anlage kommen, wie dies anhand der in Fig. 8 mit der im Kreis befindlichen Zahl 1 dargestellt ist und über seitliche Schraubpunkte (Zahl 2 im Kreis) und einen Schiebesitz (Zahl 3 im Kreis) sowie Schraubpunkten (Zahl 4 im Kreis) die Kraftstofftankanordnung am Rahmen 48 festgelegt werden kann.

Fig. 11 der Zeichnung zeigt in einer Ansicht von oben auf die Kraftstoffanordnung 1, wie diese an dem Rahmen über das Trägermodul 5 mit drei Anbindungspunkten 58 am Rahmen festgelegt werden kann.

Die unter anderem anhand von Fig. 6 der Zeichnung ersichtliche Kraftstoffpumpe 23 und deren Befestigung an der Unterseite 21 des Tankkörpers 2 ist näher anhand von Fig. 14 der Zeichnung ersichtlich.

Wie es ohne weiteres ersichtlich ist, besitzt der Tankkörper 2 an der Unterseite 21 eine Aufnahmefläche 59 in der Form einer Flanschfläche 60, welche an der Unterseite 21 mittels eines Schweißvorgangs festgelegt werden kann.

Die Kraftstoffpumpe 23 weist ein Gehäuse 61 mit einem Pumpenflansch 62 auf, der an der Flanschfläche 60 zur Auflage gebracht werden kann und unter Zwischenschaltung einer Dichtungseinrichtung 63 für eine fluiddichte Konfiguration sorgt.

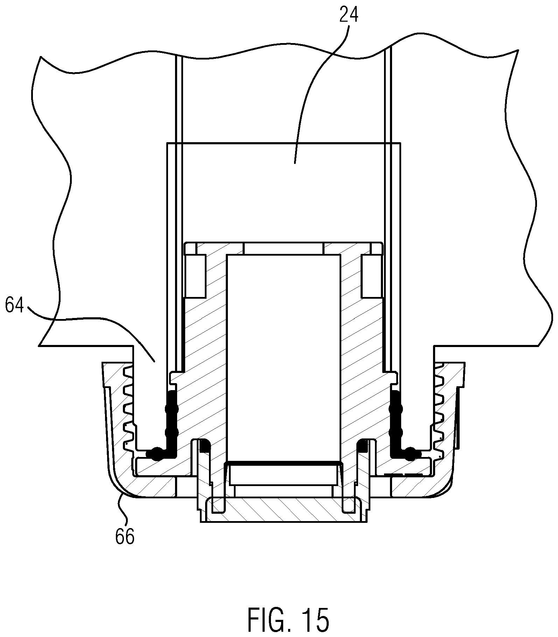

Die Anordnung der in Fig. 6 der Zeichnung ersichtlichen Füllstandsmeßeinrichtung 24 im Tankkörper 23 erfolgt bei der dargestellten Ausführungsform mittels eines an dem Tankkörper ausgebildeten und in Fig. 15 der Zeichnung ersichtlichen Gewindeflansches 64, an dem die Füllstandsmeßeinrichtung 24 unter Zwischenlage einer Dichtungseinrichtung 65 über eine auch in Fig. 7 der Zeichnung ersichtliche Überwurfmutter 66 fluiddicht und lösbar festgelegt werden kann.

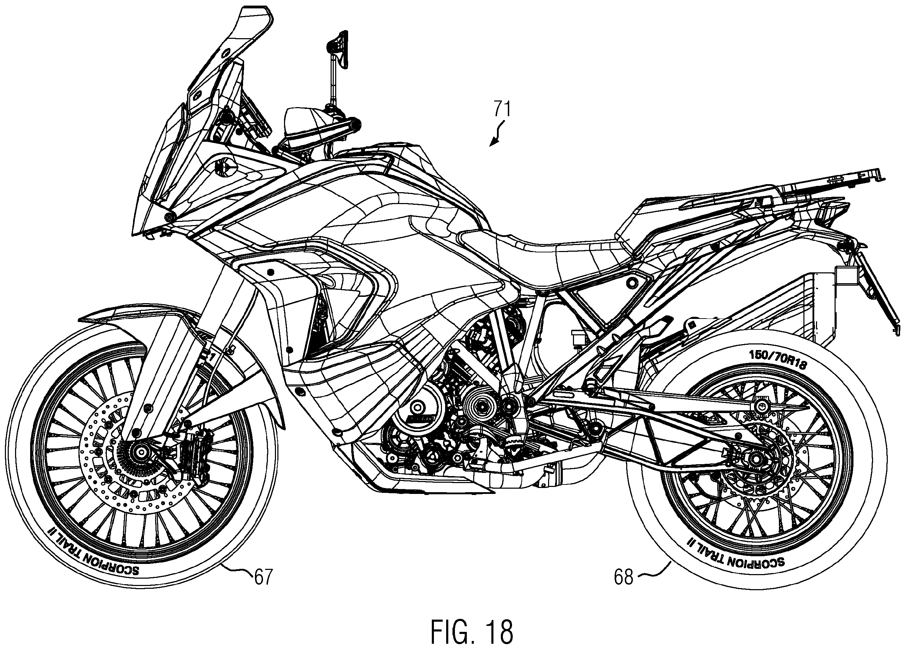

Wie es anhand von Fig. 17 der Zeichnung ersichtlich ist, kann die Kraftstofftankanordnung 1 an einem Motorrad 54 angeordnet werden und an dessen Rahmen 48 lösbar festgelegt werden. Das ein Vorderrad 67 und ein Hinterrad 68 sowie einen Antriebsmotor 69 aufweisende Motorrad 54 besitzt, wie dies anhand von Fig. 18 der Zeichnung ersichtlich ist, auch einen Fahrersattel 70, an dem ein Benutzer Platz nehmen kann und, wie dies darüber hinaus anhand von Fig. 18 der Zeichnung ersichtlich ist, die Kraftstofftankanordnung 1 kann über Verkleidungsbauteile 71 vollständig abgedeckt werden, so dass es nicht erforderlich ist, dass die Tankkörper 2, 3 der Kraftstofftankanordnung 1 separat mit einem Farbauftrag oder Decklack versehen werden müssen.

Die erfindungsgemäße Kraftstofftankanordnung zeichnet sich dadurch aus, dass separate Tankkörper auf einem Tankträger vormontiert werden können und im vormontierten Zustand an dem Fahrzeug in der Form beispielsweise eines Motorrads montiert werden können. Der ebenfalls separate Verteilerkörper sorgt dafür, dass der Kraftstoff über nur eine Kraftstoffeinfüllöffnung in die separaten Tankkörper eingefüllt werden kann und nicht pro Tankkörper eine eigenständige, verschließbare Kraftstoffeinfüllöffnung notwendig ist.

Der Verteilerkörper wird über Fluidleitungen fluidführend mit den Tankkörpern verbunden und die Kraftstofftankanordnung kann als Einheit oder Baugruppe an dem Fahrzeug positioniert und montiert werden.

Die Kraftstofftankanordnung kann als Gesamtsystem etwaigen Prüfungen unterzogen werden und kann für Wartungsarbeiten am damit versehene Fahrzeug als Gesamtsystem einfach demontiert werden und das Erfordernis der fluiddichten Konfiguration wird dabei beibehalten.

Der Tankträger besitzt zudem den Vorteil, dass er Anbindungsflächen auch für weitere Bauteile, wie Verkleidungen, Staufächer, und andere Bauteile, wie beispielsweise auch den Fahrersattel bereithält.

Hinsichtlich vorstehend im Einzelnen nicht näher erläuterter Merkmale der Erfindung wird in übrigen ausdrücklich auf die Patentansprüche und die Zeichnung verwiesen.

### Bezugszeichenliste

1. Kraftstofftankanordnung
2. Tankkörper
3. Tankkörper
4. Aufnahmemittel
5. Trägermodul
6. Verteilerelement
7. Verteilerkörper
8. Verbindungselement
9. Verbindungsschlauch
10. Verbindungsmittel
11. Fluorkautschukschlauch, Schlauch
12. Anschlussstutzen
13. Schelle
14. Tankkörperinnenraum
15. Tankkörperinnenraum
16. Kraftstoffeinfüllöffnung
17. Verteilerkörperinnenraum
18. Tankdeckel
19. Oberseite
20. Öffnung
21. Unterseite
22. Aufnahmefläche
23. Kraftstoffpumpe
24. Füllstandsmeßeinrichtung
25. Auslass
26. Anschlussstutzen
27. Oberseite
28. Anschluss
29. erste Entlüftungseinrichtung
30. Entlüftungsschlauch
31. Innenraum
32. Anschlussbereich
33. zweite Entlüftungseinrichtung
34. Entlüftungsschlauch
35. Schlauchanschlussstutzen
36. Schlauchanschlussstutzen
37. Drossel
38. Durchmesserreduzierung
39. Auslassende
40. Kraftstoffpegel
41. Restraum
42. Ausgleichsraum
43. erste Aufnahmefläche
44. zweite Aufnahmefläche
45. Befestigungslasche
46. Aufnahmefläche
47. elastisches Aufnahmemittel
48. Rahmen, Rahmenbauteil
49. Oberseite
50. dritte Aufnahmefläche
51. Handgriffelement
52. Handgriffelement
53. Querseite
54. Motorrad
55. Hauptauflagerpunkte
56. Montagefläche
57. Oberzugrohr
58. Anbindungspunkte
59. Aufnahmefläche
60. Flanschfläche
61. Gehäuse
62. Pumpenflansch
63. Dichtungseinrichtung
64. Gewindeflansch
65. Dichtungseinrichtung
66. Überwurfmutter
67. Vorderrad
68. Hinterrad
69. Antriebsmotor
70. Fahrersattel
71. Verkleidungsbauteile

## Patentansprüche

1. Kraftstofftankanordnung (1) mit mindestens zwei getrennten Tankkörpern (2, 3) mit einem jeweiligen Tankkörperinnenraum (14, 15) und mindestens einem die Tankkörper (2, 3) zur Fluidkommunikation verbindenden Verbindungselement (9), wobei die Tankkörper (2, 3) und die Kraftstofftankanordnung (1) mit Aufnahmemitteln (5) zur Anordnung an einem Rahmenbauteil (48) eines Fahrzeugs (54) mit einem Fahrersattel (70) ausgebildet ist, **dadurch gekennzeichnet, dass** die Kraftstofftankanordnung (1) ein Verteilerelement (6) mit einer Kraftstoffeinfüllöffnung (16) aufweist und das Verteilerelement (6) mittels mindestens eines fluidleitenden Verbindungsmittels (11) mit den Tankkörpern (2, 3) fluidleitend verbunden ist.

2. Kraftstofftankanordnung (1) nach Anspruch 1, **dadurch gekennzeichnet, dass** das Verteilerelement (6) derart ausgebildet ist, dass die Tankkörper (2, 3) mittels nur einer Kraftstoffeinfüllöffnung (16) des Verteilerelements (6) mit Kraftstoff befüllbar sind.

3. Kraftstofftankanordnung (1) nach Anspruch 1 oder 2, **dadurch gekennzeichnet, dass** das Verteilerelement (6) einen Verteilerkörper (7) mit einem Verteilerkörperinnenraum (17) aufweist, von dem ausgehend das mindestens eine fluidleitende Verbindungsmittel (11) zu den Tankkörpern (2, 3) zur Befüllung der Tankkörper (2, 3) mit Kraftstoff vorgesehen ist.

4. Kraftstofftankanordnung (1) nach einem der vorstehenden Ansprüche, **gekennzeichnet durch** eine erste fluidleitende Entlüftungseinrichtung (29) zwischen einem jeweiligen Tankkörper (2, 3) und dem Verteilerelement (6) sowie eine zweite fluidleitende Entlüftungseinrichtung (33) zwischen einem jeweiligen Tankkörper (2, 3) und dem Verteilerelement (6).

5. Kraftstofftankanordnung (1) nach Anspruch 4, **dadurch gekennzeichnet, dass** sich die jeweils erste (29) und zweite (33) Entlüftungseinrichtung vom Tankkörperinnenraum (14, 15) eines jeweiligen Tankkörpers (2, 3) bis zum Verteilerkörperinnenraum (17) erstreckt und mindestens eine Entlüftungseinrichtung (29, 33) zumindest entlang eines Teilbereichs der Erstreckung vom Tankkörperinnenraum (14, 15) zum Verteilerkörperinnenraum (17) innerhalb des fluidleitenden Verbindungsmittels (11) angeordnet ist.

6. Kraftstofftankanordnung (1) nach Anspruch 4 oder 5, **dadurch gekennzeichnet, dass** die zweite Entlüftungsreinrichtung (33) jeweils im Bereich der fluidleitenden Verbindung zum Verteilerkörperinnenraum (17) eine Drossel (37) aufweist, welche durch eine Durchmesserreduzierung (38) des Innendurchmessers einer fluidleitenden Verbindungsleitung (34) der zweiten Entlüftungseinrichtung (33) dargestellt ist.

7. Kraftstofftankanordnung (1) nach einem der vorstehenden Ansprüche, **dadurch gekennzeichnet, dass** die Tankkörper (2, 3) und das Verteilerelement (6) jeweils mittels eines Blasformvorgangs aus einem Kunststoffwerkstoff gefertigt sind und an einander zugeordneten Anschlußbereichen (25) jeweils einen Anschlußstutzen (12) aufweisen, welcher mittels eines Spritzgießvorgangs aus einem Kunststoffwerkstoff gefertigt ist und formschlüssig am jeweiligen Anschlußbereich (25) festgelegt ist.

8. Kraftstofftankanordnung (1) nach einem der vorstehenden Ansprüche, **dadurch gekennzeichnet, dass** das fluidleitende Verbindungsmittel (11) ein schlauchförmiger Körper ist, welcher jeweils zwischen Tankkörper (2, 3) und Verteilerkörper (7) lösbar festlegbar ist und einen Innendurchmesser aufweist, der zur Aufnahme einer fluidleitenden Entlüftungseinrichtung (29, 30) dimensioniert ist.

9. Kraftstofftankanordnung (1) nach einem der vorstehenden Ansprüche, **dadurch gekennzeichnet, dass** der Verteilerkörper (7) eine Anschlußfläche (27) zur lösbaren Festlegung einer Aufnahme (28) zur Festlegung eines Tankdeckels (18) des Fahrzeugs aufweist.

10. Kraftstofftankanordnung (1) nach einem der vorstehenden Ansprüche, **dadurch gekennzeichnet, dass** als Aufnahmemittel eine Aufnahmeeinrichtung (5) vorgesehen ist, welche mit einer ersten Aufnahmefläche (43) zur lösbaren Festlegung des Verteilerlements (6) an der Aufnahmeeinrichtung (5) und zweiten Aufnahmeflächen (44) zur lösbaren Festlegung der Tankkörper (2, 3) an der Aufnahmeeinrichtung (5) und Montageflächen (56) zur lösbaren Festlegung der Kraftstofftankanordnung (1) an dem Rahmenbauteil (48) des Fahrzeugs versehen ist.

11. Kraftstofftankanordnung (1) nach einem der vorstehenden Ansprüche, **dadurch gekennzeichnet, dass** das Aufnahmemittel (5) mittels eines Kunststoffwerkstoffes gebildet ist und in einer Draufsichtansicht eine weitgehend rechteckförmige Konfiguration aufweist mit sich von einer Unterseitenfläche weg erstreckenden Befestigungslaschen (25) zur lösbaren Festlegung der Tankkörper (2, 3).

12. Kraftstofftankanordnung (1) nach einem der vorstehenden Ansprüche, **dadurch gekennzeichnet, dass** ein Tankkörper (2, 3) an einem Unterseitenbereich (21) eine Aufnahmefläche (22) zur lösbaren Festlegung einer Kraftstoffpumpe (23) aufweist und ein Tankkörper (2, 3) an einem Unterseitenbereich (21) eine Aufnahmefläche (22) zur lösbaren Festlegung einer Füllstandsmeßeinrichtung (24) aufweist.

13. Kraftstofftankanordnung (1) nach einem der vorstehenden Ansprüche, **dadurch gekennzeichnet, dass** die Tankkörper (2, 3) mit Aufnahmeflächen (46) zur Abstützung der Tankkörper (2, 3) an elastischen Aufnahmemitteln (47) versehen sind, welche lösbar an dem Rahmenbauteil (48) festlegbar sind.

14. Kraftstofftankanordnung (1) nach einem der vorstehenden Ansprüche, **dadurch gekennzeichnet, dass** das mindestens eine Verbindungselement (9) eine an den Tankkörpern (2, 3) im Bereich deren jeweiliger Unterseite lösbar festlegbare Verbindungsleitung (9) ist.

15. Kraftstofftankanordnung (1) nach einem der vorstehenden Ansprüche, **dadurch gekennzeichnet, dass** das Verteilerelement (6) einen Ausgleichsraum (42) aufweist, der zur Aufnahme von Kraftstoff ausgebildet ist.

16. Motorrad (54) mit einem Vorderrad (67) und einem Hinterrad (68) sowie einem Rahmenbauteil (48) und einem Fahrersattel (70), **gekennzeichnet durch** eine Kraftstofftankanordnung (1) nach einem der vorstehenden Ansprüche.

## Claims

1. Fuel tank arrangement (1) having at least two separate tank bodies (2, 3) with a respective tank body inner chamber (14, 15) and at least one connecting element (9) connecting the tank bodies (2, 3) for fluidic communication, wherein the tank bodies (2, 3) and the fuel tank arrangement (1) is formed with receiving means (5) for arranging on a frame component (48) of a vehicle (54) with a rider saddle (70), **characterised in that** the fuel tank arrangement (1) has a distributor element (6) with a fuel filling opening (16), and the distributor element (6) is connected in a fluidically conductive manner to the tank bodies (2, 3) by means of at least one fluidically conductive connecting means (11).

2. Fuel tank arrangement (1) according to claim 1, **characterised in that** the distributor element (6) is formed in such a way that the tank bodies (2, 3) can be filled with fuel by means of only one fuel filling opening (16) of the distributor element (6).

3. Fuel tank arrangement (1) according to claim 1 or 2, **characterised in that** the distributor element (6) has a distributor body (7) having a distributor body inner chamber (17), starting from which the at least one fluidically conductive connecting means (11) to the tank bodies (2, 3) is provided for filling the tank bodies (2, 3) with fuel.

4. Fuel tank arrangement (1) according to one of the preceding claims, **characterised by** a first fluidically conductive venting device (29) between a respective tank body (2, 3) and the distributor element (6), and a second fluidically conductive venting device (33) between a respective tank body (2, 3) and the distributor element (6).

5. Fuel tank arrangement (1) according to claim 4, **characterised in that** the respective first (29) and second (33) venting device extends from the tank body inner chamber (14, 15) of a respective tank body (2, 3) up to the distributor body inner chamber (17), and at least one venting device (29, 33) is arranged inside the fluidically conductive connecting means (11) at least along a partial region of the extension of the tank body inner chamber (14, 15) to the distributor body inner chamber (17).

6. Fuel tank arrangement (1) according to claim 4 or 5, **characterised in that** the second venting device (33) has a throttle (37) respectively in the region of the fluidically conductive connection to the distributor body inner chamber (17), said throttle being represented by a diameter reduction (38) of the inner diameter of a fluidically conductive connecting line (34) of the second venting device (33).

7. Fuel tank arrangement (1) according to one of the preceding claims, **characterised in that** the tank bodies (2, 3) and the distributor element (6) are each produced from a plastic material by means of a blow mould process and each have a connection nozzle (12) on connection regions (25) allocated to one another, said connection nozzle being produced from a plastic material by means of an injection moulding process and being fixed on the respective connection region (25) in a form-fit manner.

8. Fuel tank arrangement (1) according to one of the preceding claims, **characterised in that** the fluidically conductive connecting means (11) is a tubular body, which can be releasably fixed respectively between the tank bodies (2, 3) and distributor body (7) and has an inner diameter which is dimensioned to receive a fluidically conductive venting device (29, 30).

9. Fuel tank arrangement (1) according to one of the preceding claims, **characterised in that** the distributor body (7) has a connection surface (27) for releasably fixing a receiver (28) for fixing a fuel cap (18) of the vehicle.

10. Fuel tank arrangement (1) according to one of the preceding claims, **characterised in that** a receiving device (5) is provided as the receiving means, which is provided with a first receiving surface (43) for releasably fixing the distributor element (6) on the receiving device (5) and second receiving surfaces (44) for releasably fixing the tank bodies (2, 3) on the receiving device (5) and mounting surfaces (56) for releasably fixing the fuel tank arrangement (1) on the frame component (48) of the vehicle.

11. Fuel tank arrangement (1) according to one of the preceding claims, **characterised in that** the receiving means (5) is formed by means of a plastic material and has an extensively rectangular configuration in a top view with fastening lugs (25) extending away from an underside surface for releasably fixing the tank bodies (2, 3).

12. Fuel tank arrangement (1) according to one of the preceding claims, **characterised in that** one tank body (2, 3) has a receiving surface (22) on an underside region (21) for releasably fixing a fuel pump (23), and one tank body (2, 3) has a receiving surface (22) on an underside region (21) for releasably fixing a filling level measuring device (24).

13. Fuel tank arrangement (1) according to one of the preceding claims, **characterised in that** the tank bodies (2, 3) are provided with receiving surfaces (46) for supporting the tank bodies (2, 3) on elastic receiving means (47), which can be releasably fixed on the frame component (48).

14. Fuel tank arrangement (1) according to one of the preceding claims, **characterised in that** the at least one connecting element (9) is a connecting line (9) that can be releasably fixed on the tank bodies (2, 3) in the region of their respective underside.

15. Fuel tank arrangement (1) according to one of the preceding claims, **characterised in that** the distributor element (6) has a compensation chamber (42), which is formed to receive fuel.

16. Motorcycle (54) having a front wheel (67) and a back wheel (68) and a frame component (48) and a rider saddle (70), **characterised by** a fuel tank arrangement (1) according to one of the preceding claims.

## Revendications

1. Agencement de réservoir de carburant (1) comportant au moins deux corps de réservoir (2, 3) séparés présentant un espace intérieur (14, 15) respectif et au moins un élément de liaison (9) reliant les corps de réservoir (2, 3) en communication fluidique, lesdits corps de réservoir (2, 3) et ledit agencement de réservoir de carburant (1) étant dotés de moyens de réception (5) destinés à être agencés sur un composant de châssis (48) d'un véhicule (54) présentant une selle conducteur (70), **caractérisé en ce que** l'agencement de réservoir de carburant (1) présente un élément de distributeur (6) comportant un orifice de remplissage de carburant (16), et l'élément de distributeur (6) est relié fluidiquement aux corps de réservoir (2, 3) à l'aide d'au moins un moyen de liaison fluidique (11).

2. Agencement de réservoir de carburant (1) selon la revendication 1, **caractérisé en ce que** l'élément de distributeur (6) est conçu de telle façon que les corps de réservoir (2, 3) peuvent être remplis de carburant par le biais d'un seul orifice de remplissage de carburant (16) de l'élément de distributeur (6).

3. Agencement de réservoir de carburant (1) selon la revendication 1 ou 2, **caractérisé en ce que** l'élément de distributeur (6) présente un corps de distributeur (7) présentant un espace intérieur (17) duquel part l'au moins un moyen de liaison fluidique (11) en direction des corps de réservoir (2, 3) afin de remplir les corps de réservoir (2, 3) de carburant.

4. Agencement de réservoir de carburant (1) selon l'une des revendications précédentes, **caractérisé par** un premier organe de purge (29) à communication fluidique entre un corps de réservoir (2, 3) respectif et l'élément de distributeur (6) ainsi qu'un deuxième organe de purge (33) à communication fluidique entre un corps de réservoir (2, 3) respectif et l'élément de distributeur (6).

5. Agencement de réservoir de carburant (1) selon la revendication 4, **caractérisé en ce que** le premier (29) et le deuxième (33) organe de purge respectif s'étendent à partir de l'espace intérieur (14, 15) d'un corps de réservoir (2, 3) respectif jusqu'à l'espace intérieur de corps de distributeur (17), et au moins un organe de purge (29, 33) est agencé au moins le long d'une portion de cette étendue allant de l'espace intérieur de corps de réservoir (14, 15) jusqu'à l'espace intérieur de corps de distributeur (17), à l'intérieur du moyen de liaison fluidique (11).

6. Agencement de réservoir de carburant (1) selon la revendication 4 ou 5, **caractérisé en ce que** le deuxième organe de purge (33) présente dans chaque cas, dans la zone de liaison fluidique menant à l'espace intérieur de corps de distributeur (17), un étranglement (37) défini par une réduction (38) du diamètre interne d'une conduite de liaison fluidique (34) du deuxième organe de purge (33).

7. Agencement de réservoir de carburant (1) selon l'une des revendications précédentes, **caractérisé en ce que** les corps de réservoir (2, 3) et l'élément de distributeur (6) sont chacun réalisés en matière plastique selon un processus de moulage par soufflage et présentent respectivement une tubulure de raccordement (12), au niveau de zones de raccordement (25) mutuellement associées, laquelle est réalisée en matière plastique selon un processus de moulage par injection et fixée par emboîtement à la zone de raccordement (25) respective.

8. Agencement de réservoir de carburant (1) selon l'une des revendications précédentes, **caractérisé en ce que** le moyen de liaison fluidique (11) est un corps en forme de tuyau susceptible d'être fixé de manière amovible respectivement entre le corps de réservoir (2, 3) et le corps de distributeur (7) et présente un diamètre intérieur dont les dimensions lui permettent de recevoir un organe de purge (29, 30) à liaison fluidique.

9. Agencement de réservoir de carburant (1) selon l'une des revendications précédentes, **caractérisé en ce que** le corps de distributeur (7) présente une surface de raccordement (27) destinée à la fixation amovible d'un support (28) destiné à la fixation d'un couvercle de réservoir (18) du véhicule.

10. Agencement de réservoir de carburant (1) selon l'une des revendications précédentes, **caractérisé en ce qu'**un moyen de réception prévu est un organe de réception (5) doté d'une première surface de réception (43) destinée à la fixation amovible de l'élément de distributeur (6) sur l'organe de réception (5) et de deuxièmes surfaces de réception (44) destinées à la fixation amovible des corps de réservoir (2, 3) sur l'organe de réception (5) ainsi que de surfaces de montage (56) destinées à la fixation amovible de l'agencement de réservoir de carburant (1) sur le composant de châssis (48) du véhicule.

11. Agencement de réservoir de carburant (1) selon l'une des revendications précédentes, **caractérisé en ce que** le moyen de réception (5) est constitué de matière plastique et présente, vu de dessus, une configuration globalement rectangulaire présentant des brides de fixation (25) s'étendant à partir d'une surface inférieure et servant à la fixation amovible des corps de réservoir (2, 3).

12. Agencement de réservoir de carburant (1) selon l'une des revendications précédentes, **caractérisé en ce qu'**un corps de réservoir (2, 3) présente, sur une zone de face inférieure (21), une surface de réception (22) destinée à la fixation amovible d'une pompe d'alimentation (23), et un corps de réservoir (2, 3) présente, sur une zone de face inférieure (21), une surface de réception (22) destinée à la fixation amovible d'une jauge de remplissage (24).

13. Agencement de réservoir de carburant (1) selon l'une des revendications précédentes, **caractérisé en ce que** les corps de réservoir (2, 3) sont dotés de surfaces de réception (46) destinées à supporter les corps de réservoir (2, 3) au niveau de moyens de réception (47) élastiques susceptibles d'être fixés de manière amovible sur le composant de châssis (48).

14. Agencement de réservoir de carburant (1) selon l'une des revendications précédentes, **caractérisé en ce que** l'au moins un élément de liaison (9) consiste en une conduite de liaison (9) susceptible d'être fixée aux corps de réservoir (2, 3) dans la zone de leur face inférieure respective.

15. Agencement de réservoir de carburant (1) selon l'une des revendications précédentes, **caractérisé en ce que** l'élément de distributeur (6) présente un espace de compensation (42) conçu pour recevoir du carburant.

16. Motocycle (54) comportant une roue avant (67) et une roue arrière (68) ainsi qu'un composant de châssis (48) et une selle conducteur (70), **caractérisé par** un agencement de réservoir de carburant (1) selon l'une des revendications précédentes.
